# EUROPÄISCHE PATENTSCHRIFT

(11) **EP 1 310 703 B1**
(45) Veröffentlichungstag und Bekanntmachung des Hinweises auf die Patenterteilung: **27.07.2005**
(21) Anmeldenummer: 02405907.3
(22) Anmeldetag: 23.10.2002
(51) Int. Cl.: F16H 25/24

(54) **Linearantrieb**
Linear drive
Entraînement linéaire

(30) Priorität: 07.11.2001 CH 20452001
(43) Veröffentlichungstag der Anmeldung: 14.05.2003
(73) Patentinhaber: Magnetic Elektromotoren AG, 4410 Liestal (CH)
(72) Erfinder: Jehle, Thomas, 79618 Rheinfelden (DE); Matter, Andrea, 4419 Lupsingen (CH); Tschudin, Beat, 4153 Reinach (CH)
(74) Vertreter: EGLI-EUROPEAN PATENT ATTORNEYS

(56) Entgegenhaltungen:
- EP-A- 0 662 573
- WO-A-98/30816

## Beschreibung

Die vorliegende Erfindung betrifft einen Linearantrieb, der ein Antriebsgehäuse und eine nicht selbsthemmende Schraubenspindel umfasst, wobei die Schraubenspindel in beide Richtungen drehbar ist und wobei der Linearantrieb durch einen in beiden Drehrichtungen antreibenden Elektromotor angetrieben wird und in Abhängigkeit von der Drehrichtung der Spindel nach vorne antreibt oder zurück zieht.

Ein linearantrieb gemäß dem Oberbegriff des Ansprüchs 1 und ein Verfahren gemäß dem Oberbegriff des Anspruchs 11 sind aus dem Prospekt der SKF, "CATR Modular range", November 1999, bekannt.

Ähnliche Linearantriebe sind z.B. aus der EP-A-0 577 541 oder der EP-A-0 662 573 bekannt. In beiden Dokumenten umfasst der Linearantrieb eine Schraubenfeder, bei der eine Anzahl Windungen um ein Ende der Spindel oder ein zylindrisches Element einer diesem zugeordneten Kraftübertragungskupplung angeordnet sind. In der EP-A-0 662 573 soll dabei das Problem gelöst werden, dass eine Rückzugsbewegung so gehemmt werden soll, dass die Spindel scheinbar selbsthemmend wird.

Aus der WO-A-98/30816 ist ein Linearantrieb bekannt, mit dem das Problem gelöst werden soll, einen Linearantrieb zur Verfügung zu stellen, mit dem sichergestellt wird, dass die Struktur und die Last durch den Antrieb nicht beschädigt wird. Die WO-A-98/30816 schlägt dabei als Lösung vor, dass die Einheit ein Mittel umfasst, das in Bezug auf die Drehung des Antriebsgehäuses einstellbar sein soll, um so die Drehgeschwindigkeit der Spindel einstellen zu können, wenn der Motor nicht in Wirkverbindung mit ihr ist. Es wird also die Lösung gewählt, bei weiterhin gesperrtem Getriebe das gesamte Getriebegehäuse drehbar zu gestalten und so eine gesteuerte Drehbewegung oder gar eine vollständige Freigabe der Drehung zu gestalten. Eine solche Anordnung kann durchaus vorteilhaft sein, wenn z.B. - wie in der WO-A-98/30816 vorgeschlagen - ein Getriebe, insbesondere ein Planetengetriebe zum Einsatz kommt, das als Ganzes in Bezug auf die Drehbewegung freigegeben werden kann bzw. soll. Wenn aber ein solches Planetengetriebe nicht vorgesehen ist, so ist die Lösung, das gesamte Gehäuse frei drehbar auszugestalten, nicht sinnvoll. Weiterhin ist die Lösung der WO-A-98/30816 mit dem Nachteil behaftet, dass dort zwei unterschiedliche Bremselemente - dort als Bremsspirale 18 und Kopplungsspirale 22 bezeichnet - notwendig sind. Es muss also nach einer Lösung gesucht werden, in der die genannten Nachteile - insbesondere die Ausgestaltung mit zwei unterschiedlichen Bremselementen, vermieden wird.

Weiterhin ist es sinnvoll, die Bedienung der drei funktionalen Einstellungen - Kopplung des Motors zur angetriebenen Bewegung einer Spindel, gebremste und gesicherte Stellung der Spindel und teilweise bzw. vollständig freigegebene Drehung der Spindel - und eine Steuerung der Geschwindigkeit der freilaufenden Spindel nicht nur mit einem Bedienelement, sondern auch durch ein funktionales Mittel ausführen zu können. Dabei soll eine Drehung des Gehäuses selbst - wie in der WO-A-98/30816 vorgeschlagen - möglichst vermieden werden.

Es ist also die Aufgabe der vorliegenden Erfindung, einen Linearantrieb zur Verfügung zu stellen, der neben dem Zustand der Kupplung von Motor und Spindel und dem Zustand, in dem zumindest eine Rücklaufbewegung unterbunden wird, einen weiteren Zustand aufweist, in dem eine freie Bewegung und damit eben doch eine Rücklaufbewegung der Spindel möglich ist. Erforderlich ist dabei, dass die Bewegung der Spindel in diesem dritten Zustand in beide Richtungen möglichst freigängig und ungebremst, aber auch mit gesteuerter Geschwindigkeit ablaufen kann, während im zweiten Betriebszustand, in dem der Motor entkoppelt ist, eine Bewegung in beide Richtungen vollständig unterbunden werden soll.

Die Erfindung löst die Aufgabe durch einen Linearantrieb nach Anspruch 1. Dabei haben die Maßnahmen der Erfindung zunächst einmal zur Folge, dass der Elektromotor gemäss der bevorzugten Ausführung der Erfindung, der selbstverständlich auch durch eine andere Antriebseinrichtung ersetzt werden kann, im ersten Betriebszustand die Spindel antreibend bewegen kann und zwar in beide Richtungen. Dies wird gemäss der bevorzugten Ausführung durch eine Spiralfeder erreicht, die in einem Fall durch ein erstes Mitnahmeelement an ihrem einen Ende zusammengezogen wird, wenn die Spindel durch die Antriebseinrichtung eine Aufwärtsbewegung erfahren soll, im anderen Fall durch ein zweites Mitnahmeelement an ihrem anderen Ende ebenfalls zusammengezogen wird, wenn die Spindel durch die Antriebseinrichtung - in entgegengesetzter Richtung - eine Rück- oder Abwärtsbewegung erfahren soll. Durch das Zusammenziehen der Spiralfeder wird diese davon befreit, in ihrem Büchsenelement fest anzuliegen und kann - zusammen mit den anderen beweglichen Elementen des Linearantriebes - mit der Spindel drehen. In beiden Fällen ist durch das Kupplungselement die Antriebseinrichtung mit der Spindel wirkverbunden. Sobald aber die Spindel das antreibende Element wird, dehnt sich die genannte Einheit aus und bremst, so dass die Spindel den Motor bezüglich der Wirkung nicht überholen kann.

Im zweiten Betriebszustand ist durch das Schaltelement und das Kupplungselement die Spindel von der Antriebseinrichtung entkoppelt und da keine Kraft auf die genannten Mitnahmeelemente der Spiralfeder ausgeübt wird, befindet sich diese im ausgedehnten Zustand und ist in ihrem Büchsenelement arretiert. Die Spindel kann in diesem Betriebszustand also weder eine Vorwärts- noch eine Rückwärtsbewegung machen. Im dritten Betriebszustand gemäss der vorliegenden Erfindung wird nun durch die Einnahme einer dritten Stellung des Schaltelementes ein Wirkelement gegen das obere Mitnahmeelement der Spiralfeder gedrückt, vorzugsweise durch einen angeschrägten Zapfen am unteren Ende des Kupplungsteils, und die Spiralfeder wird - ohne dass irgendeine Kraft oder Bewegung vom - in diesem Falle entkoppelten - Antriebselement oder von der Spindel ausgehen müsste, durch das Wirkelement zusammengezogen und aus ihrem Büchsenelement - entsprechend der auf das Bedienelement ausgeübten Kraft oder entsprechend der vom Bedienelement eingenommenen Feineinstellung - teilweise noch bremsend oder vollständig - gelöst. Damit ist die Spindel in beide Richtungen freiläufig und zwar bei einer teilweisen Auslenkung des Bedienelementes gebremst und einer vollständigen Auslenkung des Bedienelementes ungebremst.

Weitere vorteilhafte Einzelheiten des Linearantriebes der vorliegenden Erfindung sind in den Unteransprüchen dargelegt.

In einem nebengeordneten, unabhängigen Anspruch wird ein Verfahren zum Schnellentkoppeln eines Linearantriebes definiert.

Die vorgenannten sowie die beanspruchten und in den nachfolgenden Ausführungsbeispielen beschriebenen erfindungsgemäss zu verwendenden Elemente unterliegen in ihrer Größe, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - ein Linearantrieb und ein dazugehöriger Verfahrensablauf zur vorliegenden Erfindung erläutert wird.

In den Zeichnungen zeigen:
Figur 1 eine Gesamtdarstellung des Linearantriebes der vorliegenden Erfindung;

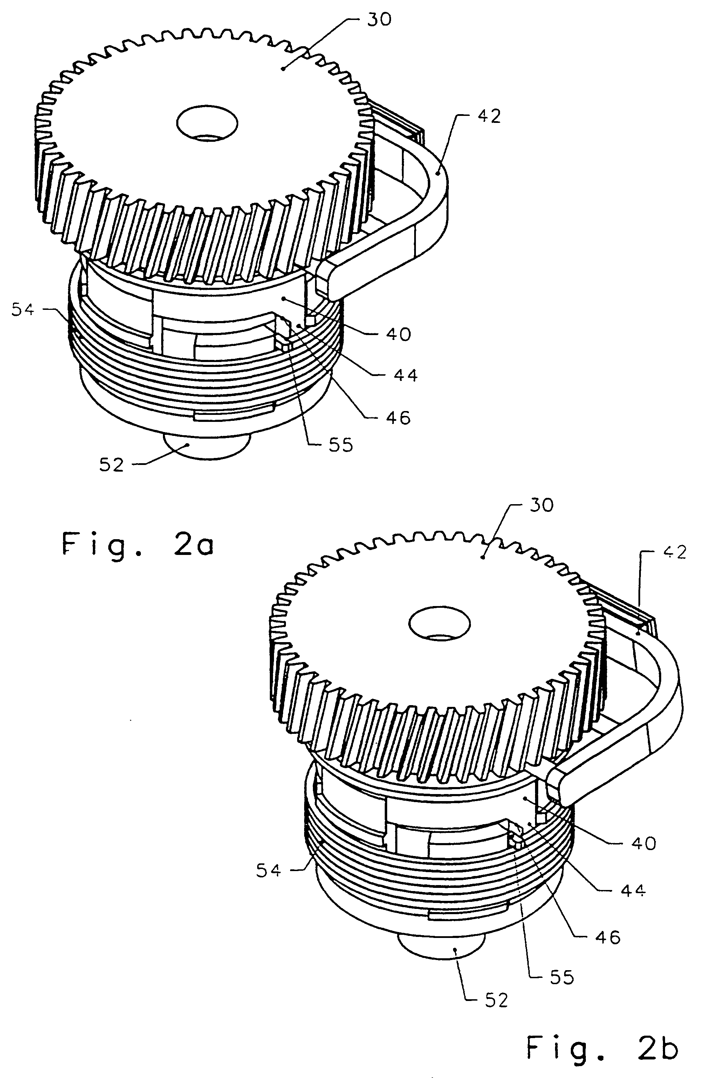

Figur 2a eine Darstellung in Schrägansicht auf das Kupplungs- und Übertragungsteil gemäss Figur 1 in der eingekuppelten Stellung, in der das Antriebselement und die Schraubenspindel verbunden werden sollen;
Figur 2b eine Darstellung in Schrägansicht auf das Kupplungs- und Übertragungsteil gemäss Figur 1 in der ausgekuppelten Stellung, in der das Antriebselement und die Schraubenspindel entkoppelt sein sollen und die Schraubenspindel arretiert werden soll;

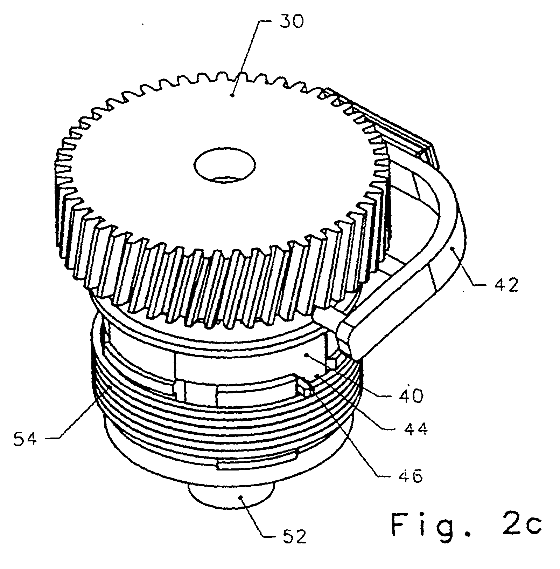

Figur 2c eine in Schrägansicht auf das Kupplungs- und Übertragungsteil gemäss Figur 1 in der freien Stellung, in der das Antriebselement und die Schraubenspindel entkoppelt sein sollen und die Schraubenspindel freilaufend sein soll;

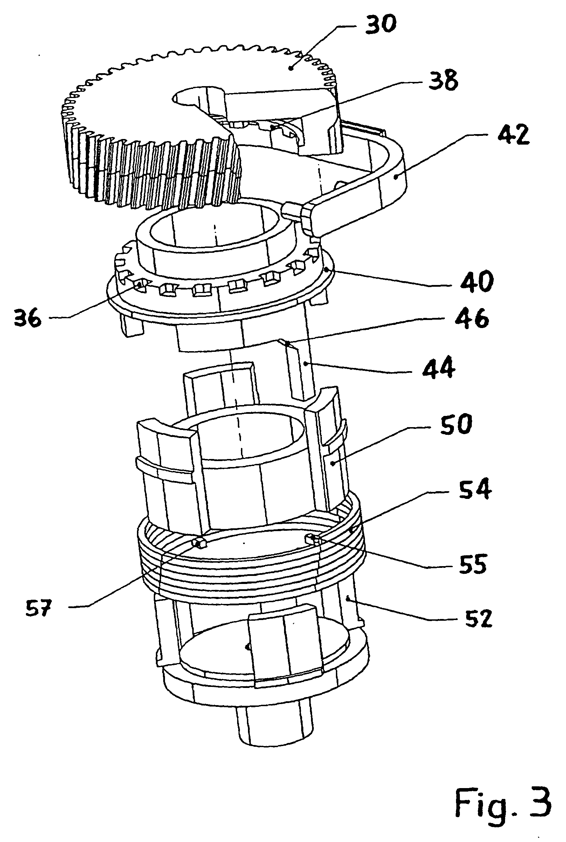

Figur 3 eine Explosionszeichnung der Elemente des Kupplungs- und Übertragungsteils gemäss Figuren 1 bis 2c;
Figur 4a eine Schrägansicht der mit der Spiralfeder direkt zusammenwirkenden Teile; und

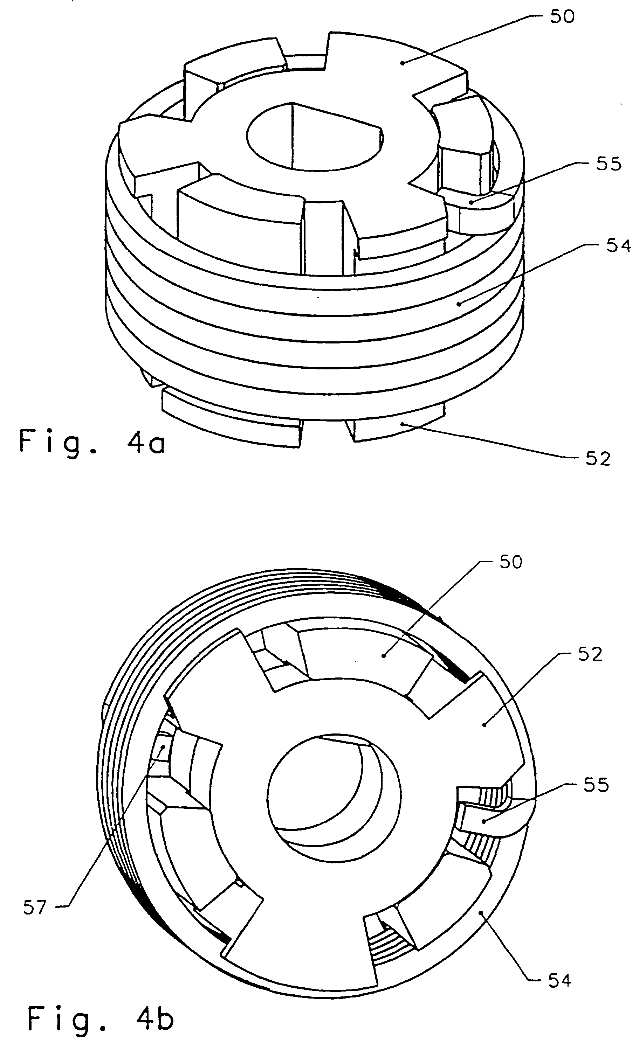

Figur 4b ein Aufsicht auf die Teile gemäss Figur 4a.

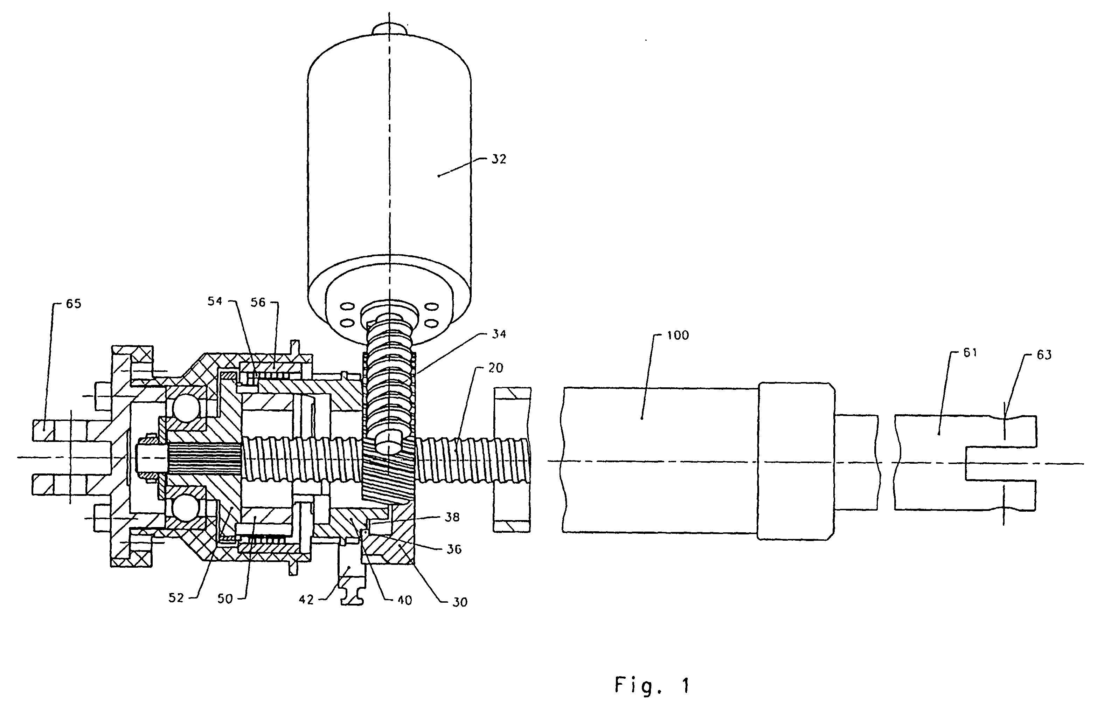

Bei dem in Figur 1 als Ganzes mit 100 bezeichnete Linearantrieb wirkt im gekoppelten Zustand das Drehmoment eines Elektromotors 32 über seine Antriebswelle 34 zunächst auf ein Schneckenrad 30. An diesem Schneckenrad 30 sind Zähne 36 angebracht, die mit entsprechenden Zähnen 38 an dem Kupplungselement 40 in diesem Zustand in Eingriff stehen. Das Kupplungselement bewirkt nun ein Drehen eines oberen Hemmteils 50 durch entsprechende Rastelemente. Dieses obere Hemmteil 50 und das untere Hemmteil 52 sind beide innerhalb einer Spiralfeder 54 angeordnet. Der untere Teil der Rastelemente des oberen Hemmteils 50 ist dabei jeweils als Anschlagfläche zum Anschlagen an einen oberen Mitnahmehaken 55 der Spiralfeder 54 ausgebildet. In diesem Zustand bewirkt das auf dem genannten Weg auf das obere Hemmteil 50 ausgeübte Drehmoment des Elektromotors 32, dass die Spiralfeder 54 gespannt wird und sich damit aus einer arretierten Lage innerhalb der Büchse, in der die Spiralfeder angeordnet ist, lösen kann. Das angelegte Drehmoment wirkt nun vom oberen Hemmteil 50 über das untere Hemmteil 52 auf die Schraubenspindel 20, die sich mit der Geschwindigkeit des Elektromotors 32 dreht und ein Linearbewegungsteil 61 in eine bestimmte Richtung linear bewegt, abhängig von der Drehrichtung des Elektromotors 32 und damit der Schraubenspindel 20. Es sollte dabei bemerkt werden, dass in einer Richtung die Anschlagfläche des unteren Hemmteils 52 den unteren Mitnahmehaken 57 mitnimmt und dadurch die Spiralfeder 54 spannt. Auf diese Weise wird bewirkt, dass die Spiralfeder 54 unabhängig von der Drehrichtung gespannt wird.

Wird nun dadurch, dass der Schalthebel 42 in seine mittlere Position gebracht wird, das Kupplungsteil 40 etwas abgesenkt, so greifen die Zähne 36 und 38 nicht mehr ineinander und die Einrastverbindung zwischen dem Schneckenrad 30 und dem Kupplungsteil 40 wird gelöst und der Elektromotor 32 übt - unabhängig, ob er sich dreht oder nicht - kein Drehmoment mehr auf das obere Hemmteil 50 aus. Dadurch schlägt weder das obere noch das untere Hemmteil 52 entspannend an die Mitnahmehaken 55, 57 und damit an die Spiralfeder 54 an und diese bleibt innerhalb ihrer Buchse 56 arretiert. Im vorliegenden Ausführungsbeispiel wird sogar umgekehrt ein Anschlag auf zumindest einen der Mitnahmehaken 55 oder 57 ausgeübt, wodurch in diesem Ausführungsbeispiel die Arretierwirkung noch erhöht wird. Die Spindel kann sich in diesem Zustand nicht drehen.

Wird nun aber dadurch, dass der Schalthebel 42 in seine untere Position gebracht wird, das Kupplungsteil 40 ganz abgesenkt, so greift eine schräge Fläche 46 an dem unten am Kupplungsteil 40 angeordneten Stift 44, die im vorliegenden Ausführungsbeispiel einen Winkel von 30° bis 60°, vorzugsweise 40 bis 50°, gegenüber der Absenkrichtung aufweist und der höchst vorzugsweise 45° ist, an den oberen Mitnahmehaken 55 an und spannt dadurch die Feder 54, auch wenn kein Drehmoment durch den Motor ausgeübt wird. Die Feder 54 wird aus der Buchse 56 gelöst und so kann sich die Schraubenspindel 20 nunmehr drehen. Im vorliegenden Ausführungsbeispiel wird durch die auf den nach unten bewegten Schalthebel 42 ausgeübte Druckkraft die Geschwindigkeit der Spindel 20 eingestellt. Die Druckkraft ist im vorliegenden Ausführungsbeispiel aber auch abhängig von der Last, die auf der Spindel 20 ruht und der Steigung der Spindel 20. Wenn nämlich der Schalthebel 42 nur etwas nach unten gedrückt wird, so wird die Feder 54 nur etwas gespannt und es verbleibt durch ein noch immer teilweises Anliegen der Spiralfeder 54 an der sie umgebenden Buchse 56 eine Reibungs- und damit eine Bremskraft erhalten. Erst wenn der Schalthebel 42 mit voller Kraft ganz nach unten gedrückt wird, dann ist die Spiralfeder 54 so weit gespannt, dass sie fast nicht mehr an der Buchse 56 anliegt und nunmehr kann sich die Spindel 20 frei bewegen. Im vorliegenden Ausführungsbeispiel kann durch die Auswahl der Druckkraft die Geschwindigkeit - quasi durch eine Feinabstimmung - frei gewählt werden. Es ist alternativ aber auch ausführbar, dass dieser zweite Entkopplungszustand durch ein Rastelement diskret unterteilbar ist, dass also nur eine Vielzahl von ganz bestimmten Bremskräften ausgeübt werden können.

## Patentansprüche

1. Linearantrieb mit
- einer nicht selbstgehemmten Schraubenspindel (20), die in beide Richtungen drehbar ist,
- einem Drehantriebsmittel (32) mit einer Antriebswelle (34) zum Erzeugen einer Drehbewegung, die mit der Schraubenspindel (20) in Wirkverbindung bringbar ist,
- einem Linearantriebsmittel (61), das durch eine Drehung der Schraubenspindel (20) in Abhängigkeit von deren Drehrichtung vorwärts oder rückwärts bewegbar ist,
- einem Kupplungsmittel (40), mit dem die Schraubenspindel (20) mit dem Drehantriebsmittel (32) in und aus Wirkverbindung bringbar ist,
- einem Schaltmittel (42) zum Schalten des Kupplungsmittels (40), wobei
- das Kupplungsmittel (40) in einen ersten Entkopplungszustand bringbar ist, bei dem die Schraubenspindel (20) vom Drehantriebsmittel (32) entkoppelt und in einem arretierten Zustand ist, und
- das Kupplungsmittel (40) in einen zweiten Entkopplungszustand bringbar ist, bei dem die Schraubenspindel (20) vom Drehantriebsmittel (32) ebenfalls entkoppelt, bei dem aber die Schraubenspindel (20) in beide Drehrichtungen beweglich ist, wobei in diesem zweiten Entkopplungszustand die Bremswirkung und damit die Drehgeschwindigkeit der Schraubenspindel (20) durch die Feineinstellung des Schaltmittels (42) gewählt werden kann,
- das Kupplungsmittel (40) ein Spiralfederelement (54) und ein Büchsenelement (56) zur Aufnahme des Spiralfederelementes (54) aufweist, wobei das Spiralfederelement (54) in einem ersten, entspannten Zustand fest im Büchsenelement (56) anliegt und **dadurch** eine Bewegung der Schraubenspindel (20) verhindert,
**dadurch gekennzeichnet, dass**
das Spiralfederelement (54) in einem zweiten, gespannten Zustand nach innen vom Büchsenelement (56) gelöst ist und **dadurch** eine Bewegung der Schraubenspindel (20) in Abhängigkeit von der Feineinstellung des Schaltmittels (42) zulässt, wobei das Kupplungsmittel (40) ein Wirkmittel (44, 46) aufweist, mit dem im besagten zweiten Entkopplungszustand das Spiralfederelement (54) spannbar ist.

2. Linearantrieb nach Anspruch 1, **gekennzeichnet durch** Mitnahmeelemente (55, 57) an beiden Enden des Spiralfederelementes (54), mit denen das Spiralfederelement (54) spannbar ist und **dadurch** vom Büchsenelement (56) gelöst wird, wobei die Mitnahmeelemente (55, 57) als nach innen gebogene Hakenmittel am Spiralfederelement (54) ausgebildet sind.

3. Linearantrieb nach einem der Ansprüche 1 oder 2, **gekennzeichnet durch** ein oberes Hemmteil (50) und ein unteres Hemmteil (52), wobei das obere Hemmteil (50) und das untere Hemmteil (52) zumindest teilweise ineinander geschoben sind und beide Hemmteile (50, 52) zumindest teilweise innerhalb des Spiralfederelementes (54) angeordnet sind und Anschlagflächen zum Spannen des Spiralfederelementes (54) aufweisen.

4. Linearantrieb nach Anspruch 3, **dadurch gekennzeichnet, dass** die Mitnahmeelemente (55, 57) des Spiralfederelementes (54) an den besagten Anschlagflächen der Hemmteile (50, 52) anschlagbar sind und **dadurch** das Spiralfederelement (54) spannbar ist.

5. Linearantrieb nach Anspruch 4, **dadurch gekennzeichnet, dass** die Hemmteile (50, 52) so angeordnet sind, dass das Spiralfederelement (54) durch zumindest eines der Hemmteile (50, 52) gespannt wird, wenn im gekoppelten Zustand zwischen Drehantriebsmittel (32) und der Schraubenspindel (20) ein Drehmoment bestimmter Grösse in eine beliebige Drehrichtung wirkt.

6. Linearantrieb nach Anspruch 4 oder 5, **dadurch gekennzeichnet, dass** die Hemmteile (50, 52) so angeordnet sind, dass das Spiralfederelement (54) entspannt und damit die Schraubenspindel (20) arretiert ist, wenn im besagten, ersten entkoppelten Zustand zwischen dem Drehantriebsmittel (32) und der Schraubenspindel (20) ein Drehmoment bestimmter Grösse nicht wirkt.

7. Linearantrieb nach Anspruch 1 bis 6, **dadurch gekennzeichnet, dass** das Wirkmittel eine schräge Kante (46) aufweist, die durch Absenken des Kupplungsmittels (40) für den besagten, zweiten Entkopplungszustand eines der Mitnahmeelemente (55) seitlich bewegt und **dadurch** das Spiralfederelement (54) spannt.

8. Linearantrieb nach Anspruch 7, **dadurch gekennzeichnet, dass** das Schaltmittel (42) so ausgebildet ist, dass es das Kupplungsmittel (40) in eine ausgefahrene, vorzugsweise obere Position schalten kann, in der der besagte, gekoppelte Zustand geschaltet ist, es das Kupplungsmittel (40) in eine eingefahrene, vorzugsweise mittlere Position schalten kann, in der der besagte, erste entkoppelte Zustand geschaltet ist, in der die Schraubenspindel (20) arretiert ist und es das Kupplungsmittel (40) in eine untere, durch Feinabstimmung unterteilte oder einstellbare Position schalten kann, in der der besagte, zweite entkoppelte Zustand geschaltet ist, in der die Spindel (20) teilweise gebremst oder ungebremst laufen kann.

9. Linearantrieb nach einem der vorstehenden Ansprüche, **gekennzeichnet durch** ein Rad, vorzugsweise ein Schneckenrad (30) Stirnrad, Kegelrad, Zahnriemenrad oder ein gleichwirkendes Element, zur Wirkverbindung der Antriebswelle (34) mit dem Kupplungsmittel (40).

10. Linearantrieb nach Anspruch 9, **gekennzeichnet durch** Rastelemente (36) am Schneckenrad (30), die mit entsprechenden Rastelementen (38) am Kupplungsmittel (40) in eingerastete Wirkverbindung bringbar sind.

11. Verfahren zum Betrieb eines Linearantriebes mit einer nicht selbstgehemmten Schraubenspindel (20), die in beide Richtungen drehbar ist, einem Drehantriebsmittel (32) mit einer Antriebswelle (34) zum Erzeugen einer Drehbewegung, die mit der Schraubenspindel (20) in Wirkverbindung bringbar ist, einem Linearantriebsmittel (61), das durch eine Drehung der Schraubenspindel (20) in Abhängigkeit von deren Drehrichtung vorwärts oder rückwärts bewegbar ist, einem Kupplungsmittel (40), mit dem die Schraubenspindel (20) mit dem Drehantriebsmittel (32) in und aus Wirkverbindung bringbar ist, einem Schaltmittel (42) zum Schalten des Kupplungsmittels (40), wobei wahlweise
- das Kupplungsmittel (40) durch das Schaltmittel (42) in einen gekoppelten Zustand geschaltet wird, bei dem die Schraubenspindel (20) mit dem Drehantriebsmittel (32) in und aus Wirkverbindung steht,
- das Kupplungsmittel (40) durch das Schaltmittel (42) in einen ersten Entkopplungszustand geschaltet wird, bei dem die Schraubenspindel (20) vom Drehantriebsmittel (32) entkoppelt und bei dem die Schraubenspindel (20) in einen gebremsten oder arretierten Zustand ist, wobei durch ein Spiralfederelement (54) und ein Büchsenelement (56) zur Aufnahme des Spiralfederelementes (54) das Spiralfederelement (54) in einem ersten, entspannten Zustand fest im Büchsenelement (56) anliegt und **dadurch** eine Bewegung der Schraubenspindel (20) verhindert,
**dadurch gekennzeichnet, dass**
- das Kupplungsmittel (40) in einen zweiten Entkopplungszustand geschaltet wird, bei dem die Schraubenspindel (20) vom Drehantriebsmittel (32) ebenfalls entkoppelt, bei dem aber die Schraubenspindel (20) in beide Drehrichtungen beweglich ist, wobei die Bremswirkung und damit die Drehgeschwindigkeit der Schraubenspindel durch die Feineinstellung des Schaltmittels (42) gewählt werden kann, und wobei mit einem Wirkmittel (44, 46) des Kupplungsmittels (40) das Spiralfederelement (54) im besagten zweiten Entkopplungszustand gespannt wird.

12. Verfahren zum Betrieb eines Linearantriebes nach Anspruch 11, **dadurch gekennzeichnet, dass** durch Mitnahmeelemente (55, 57) an beiden Enden des Spiralfeder elementes (54) das Spiralfederelement (54) gespannt und **dadurch** vom Büchsenelement (56) gelöst wird, wobei das Wirkmittel (44, 46) im besagten zweiten Entkopplungszustand in Eingriff mit den Mitnahmeelementen gebracht wird.

13. Verfahren zum Betrieb eines Linearantriebes nach einem der Ansprüche 11 oder 12, **dadurch gekennzeichnet, dass** das Spiralfederelement (54) zumindest auch **dadurch** gespannt wird, dass ein oberes Hemmteil (50) und ein unteres Hemmteil (52) zumindest teilweise ineinander geschoben werden, wobei beide Hemmteile (50, 52) zumindest teilweise innerhalb des Spiralfederelementes (54) angeordnet sind und Anschlagflächen zum Spannen des Spiralfederelementes (54) aufweisen.

14. Verfahren zum Betrieb eines Linearantriebes nach Anspruch 13, **dadurch gekennzeichnet, dass** Mitnahmeelemente (55, 57) des Spiralfederelementes (54) an den besagten Anschlagflächen der Hemmteile (50, 52) anschlagen und **dadurch** das Spiralfederelement (54) im gekoppelten Zustand gespannt wird und dass in dem besagten zweiten Entkopplungszustand das Wirkelement (44, 46) das Spiralfederelement (54) in Abhängigkeit von der Feineinstellung des Schaltmittels (42) spannt.

15. Verfahren zum Betrieb eines Linearantriebes nach Anspruch 14, **dadurch gekennzeichnet, dass** die Hemmteile (50, 52) das Spiralfederelement (54) durch zumindest eines der Hemmteile (50, 52) spannen, wenn im gekoppelten Zustand zwischen Drehantriebsmittel (32) und der Schraubenspindel (20) ein Drehmoment bestimmter Grösse in eine beliebige Drehrichtung wirkt.

16. Verfahren zum Betrieb eines Linearantriebes nach Anspruch 14 oder 15, **dadurch gekennzeichnet, dass** die Hemmteile (50, 52) das Spiralfederelement (54) entspannen und damit die Schraubenspindel (20) arretiert ist, wenn im besagten, ersten entkoppelten Zustand zwischen dem Drehantriebsmittel (32) und der Schraubenspindel (20) ein Drehmoment bestimmter Grösse nicht wirkt.

17. Verfahren zum Betrieb eines Linearantriebes nach Anspruch 14 bis 16, **dadurch gekennzeichnet, dass** das Kupplungsmittel (40) im besagten zweiten Entkopplungszustand abgesenkt wird, und das Wirkmittel (44, 46) eines der Mitnahmeelemente (55) seitlich bewegt und **dadurch** das Spiralfederelement (54) spannt.

## Claims

1. A linear drive comprising
• a non-self-locked screw spindle (20) which can be rotated in both directions;
• a rotary drive means (32) with a drive shaft (34) for generating a rotary movement, which drive shaft (34) can be brought into effective connection with the screw spindle (20);
• a linear drive means (61) which by rotating the screw spindle (20) can be moved forward or backward, depending on the direction of rotation of said screw spindle (20) ;
• a clutch means (40) by means of which the screw spindle (20) can be brought into and out of effective connection with the rotary drive means (32);
• a switching means (42) for switching the clutch means (40); wherein
• the clutch means (40) can be brought into a first decoupled state in which the screw spindle (20) is decoupled from the rotary drive means (32) and is in a stopped state; and
• the clutch means (40) can be brought into a second decoupled state in which the screw spindle (20) is also decoupled from the rotary drive means (32), but in which the screw spindle (20) can be moved in both directions of rotation, wherein in this second decoupled state the braking effect and thus the rotary speed of the screw spindle (20) can be selected by fine adjustment of the switching means (42);
• the clutch means (40) comprises a spiral spring element (54) and a bush element (56) to accommodate the spiral spring element (54), wherein the spiral spring element (54) in a first, relaxed state firmly rests against the bush element (56), thus preventing movement of the screw spindle (20);
**characterised in that**
• the spiral spring element (54) in a second, tensioned state is detached towards the inside from the bush element (56), thus permitting movement of the screw spindle (20) depending on the fine adjustment of the switching means (42), wherein the clutch means (40) comprises an effective means (44, 46) with which in said second decoupled state the spiral spring element (54) can be tensioned.

2. The linear drive according to claim 1, **characterised by** engaging elements (55, 57) on both ends of the spiral spring element (54), by means of which engaging elements (55, 57) the spiral spring element (54) is tensionable and in this way is detached from the bush element (56), wherein the engaging elements (55, 57) are inward-bent hook means located on the spiral spring element (54).

3. The linear drive according to one of claims 1 or 2, **characterised by** an upper inhibiting part (50) and a lower inhibiting part (52), wherein the upper inhibiting part (50) and the lower inhibiting part (52) are at least partly pushed one inside the other, and both inhibiting parts (50, 52) are at least in part arranged within the spiral spring element (54) and comprise end stop surfaces for tensioning the spiral spring element (54).

4. The linear drive according to claim 3, **characterised in that** the engaging elements (55, 57) of the spiral spring element (54) can be made to come to a stop at said end stop surfaces of the inhibiting parts (50, 52) and in this way the spiral spring element (54) is tensionable.

5. The linear drive according to claim 4, **characterised in that** the inhibiting parts (50, 52) are arranged such that the spiral spring element (54) is tensioned by at least one of the inhibiting parts (50, 52) if in the coupled state between the rotary drive means (32) and the screw spindle (20) a torque of a certain magnitude acts in either direction of rotation.

6. The linear drive according to claim 4 or 5, **characterised in that** the inhibiting parts (50, 52) are arranged such that the spiral spring element (54) is released and thus the screw spindle (20) is stopped if in said first decoupled state there is not a torque of a certain magnitude present between the rotary drive means (32) and the screw spindle (20).

7. The linear drive according to claims 1 to 6, **characterised in that** the effective means has an inclined edge (46) which by lowering the clutch means (40) for said second decoupled state laterally moves one of the engaging elements (55), thus tensioning the spiral spring element (54).

8. The linear drive according to claim 7, **characterised in that** the switching means (42) is designed in such a way that it can switch the clutch means (40) to an extended, preferably upper, position in which said coupled state is switched; that it can switch the clutch means (40) in a retracted, preferably middle, position in which said first decoupled state is switched, in which the screw spindle (20) is stopped; and **in that** it can switch the clutch means (40) into a lower position, subdivided or adjustable by fine adjustment, in which lower position said second decoupled state is switched, in which the spindle (20) can operate partly braked or unbraked.

9. The linear drive according to any one of the preceding claims, **characterised by** a wheel, preferably a worm wheel (30), spur wheel, angular wheel, toothed belt wheel or some element having an equivalent effect, for effective connection of the drive shaft (34) to the clutch means (40).

10. The linear drive according to claim 9, **characterised by** locking elements (36) on the worm wheel (30) which locking elements (36) by means of corresponding locking elements (38) on the clutch means (40) can be brought into locked-in effective connection.

11. A method for operating a linear drive with a non-self-locked screw spindle (20) which can be rotated in both directions; a rotary drive means (32) with a drive shaft (34) for generating a rotary movement, which drive shaft (34) can be brought into effective connection with the screw spindle (20); a linear drive means (61) which by rotating the screw spindle (20) can be moved forward or backward, depending on the direction of rotation of said screw spindle (20); a clutch means (40) by means of which the screw spindle (20) can be brought into and out of effective connection with the rotary drive means (32); a switching means (42) for switching the clutch means (40), wherein optionally
• the clutch means (40) is switched to a coupled state by the switching means (42) in which coupled state the screw spindle (20) is in and out of effective connection with the rotary drive means (32);
• the clutch means (40) is switched to a first decoupled state by the switching means (42) in which first decoupled state the screw spindle (20) is decoupled from the rotary drive means (32), and in which the screw spindle (20) is in a braked or stopped state, wherein, by means of a spiral spring element (54) and a bush element (56) for accommodating the spiral spring element (54), the spiral spring element (54) in a first, released state firmly rests against the inside of the bush element (56), thus preventing movement of the screw spindle (20),
**characterised in that**
• the clutch means (40) is switched to a second decoupled state in which the screw spindle (20) is also decoupled from the rotary drive means (32), but in which the screw spindle (20) is rotatable in both directions of rotation, wherein the braking effect and thus the rotary speed of the screw spindle can be selected by means of fine adjustment of the switching means (42), and wherein with an effective means (44, 46) of the clutch means (40) the spiral spring element (54) is tensioned in said second decoupled state.

12. The method for operating a linear drive according to claim 11, **characterised in that**, by means of engaging elements (55, 57) on both ends of the spiral spring element (54), the spiral spring element (54) is tensioned and thus detached from the bush element (56), wherein the effective means (44, 46) in said second decoupled state is brought to engage the engaging elements.

13. The method for operating a linear drive according to one of claims 11 or 12, **characterised in that** the spiral spring element (54) is at least also tensioned **in that** an upper inhibiting part (50) and a lower inhibiting part (52) are at least partly pushed one inside the other, wherein both inhibiting parts (50, 52) are at least partly arranged within the spiral spring element (54) and comprise end stop surfaces for tensioning the spiral spring element (54).

14. The method for operating a linear drive according to claim 13, **characterised in that** engaging elements (55, 57) of the spiral spring element (54) rest against said end stop surfaces of the inhibiting parts (50, 52), and thus the spiral spring element (54) is tensioned in the coupled state, and **in that** in said second decoupled state the effective means (44, 46) tensions the spiral spring element (54) depending on fine adjustment of the switching means (42).

15. The method for operating a linear drive according to claim 14, **characterised in that** the inhibiting parts (50, 52) tension the spiral spring element (54) by means of at least one of the inhibiting parts (50, 52) if, in the coupled state, between the rotary drive means (32) and the screw spindle (20) a torque of a certain magnitude acts in either direction of rotation.

16. The method for operating a linear drive according to claim 14 or 15, **characterised in that** the inhibiting parts (50, 52) release the spiral spring element (54), and in this way the screw spindle (20) is stopped if in said first decoupled state there is no torque of a certain magnitude between the rotary drive means (32) and the screw spindle (20).

17. The method for operating a linear drive according to any one of claims 14 to 16, **characterised in that** the clutch means (40) in said second decoupled state is lowered, and laterally moves the effective means (44, 46) of one of the engaging elements (55), thus tensioning the spiral spring element (54).

## Revendications

1. Entraînement linéaire avec
- un arbre fileté non autobloquant (20), qui est rotatif dans les deux directions,
- un moyen d'entraînement rotatif (32) avec un arbre d'entraînement (34) pour générer un mouvement rotatif, qui peut être amené en interaction avec l'arbre fileté (20),
- un moyen d'entraînement linéaire (61) qui peut être déplacé en avant ou en arrière par une rotation de l'arbre fileté (20), en fonction de son sens de rotation,
- un moyen d'accouplement (40), à l'aide duquel l'arbre fileté (20) peut être mis en interaction ou retiré de l'interaction avec le moyen d'entraînement rotatif (32),
- un moyen de commutation (42) pour commuter le moyen d'accouplement (40),
- le moyen d'accouplement (40) pouvant être amené dans un premier état de découplage, dans lequel l'arbre fileté (20) est découplé du moyen d'entraînement rotatif (2) et se trouve dans un état bloqué; et
- le moyen d'accouplement (40) pouvant être amené dans un second état de découplage, dans lequel l'arbre fileté (20) est également découplé du moyen d'entraînement en rotation (32), mais dans lequel l'arbre fileté (20) peut être déplacé dans les deux sens de rotation, l'effet de freinage et donc la vitesse de rotation de l'arbre fileté (20) pouvant être sélectionné par réglage fin du moyen de commutation (42), dans ce second état de découplage,
- le moyen d'accouplement (40) comportant un élément à ressort en spirale (54) et un élément à douille (56) pour loger l'élément à ressort en spirale (54), dans un premier état de détente du ressort, l'élément à ressort en spirale (54) s'appliquant fermement dans l'élément à douille (56) et évitant de ce fait un mouvement de l'arbre fileté (20),
**caractérisé en ce que**
dans un second état de tension du ressort, l'élément à ressort en spirale (54) est détaché vers l'intérieur de l'élément à douille (56) et admet à cet effet un mouvement de l'arbre fileté (20) en fonction du réglage fin du moyen de commutation (42), le moyen d'accouplement (40) comportant un moyen actif (44, 46), à l'aide duquel l'élément à ressort en spirale (54) peut être tendu dans le second état de découplage cité.

2. Entraînement linéaire selon la revendication 1, **caractérisé par** des éléments d'accrochage (55, 57) sur les deux extrémités de l'élément à ressort en spirale (54), à l'aide desquels l'élément à ressort en spirale (54) peut être tendu et est détaché de ce fait de l'élément à douille (56), les éléments d'accrochage (55, 57) étant conçus en tant que moyens à crochets courbés vers l'intérieur sur l'élément à ressort en spirale (54).

3. Entraînement linéaire selon l'une quelconque des revendications 1 et 2, **caractérisé par** un élément d'arrêt supérieur (50) et par un élément d'arrêt inférieur (52), l'élément d'arrêt supérieur (50) et l'élément d'arrêt inférieur (52) étant au moins partiellement emboîtés l'un dans l'autre et les deux moyens d'arrêt (50, 52) étant disposés au moins partiellement à l'intérieur de l'élément à ressort en spirale (54) et comportant des surfaces de butée pour tendre l'élément à ressort en spirale (54).

4. Entraînement linéaire selon la revendication 3, **caractérisé en ce que** les éléments d'accrochage (55, 57) de l'élément à ressort en spirale (54) peuvent venir en butée sur les surfaces de butées citées des éléments d'arrêt (50, 52) et que l'élément à ressort en spirale (54) peut être tendu de ce fait.

5. Entraînement linéaire selon la revendication 4, **caractérisé en ce que** les éléments d'arrêt (50, 52) sont disposés de façon telle que l'élément à ressort en spirale (54) est tendu par au moins l'un des éléments d'arrêt (50, 52), si à l'état accouplé entre le moyen d'entraînement en rotation (32) et l'arbre fileté (20) un couple de rotation d'une valeur déterminée agit dans un sens de rotation quelconque.

6. Entraînement linéaire selon la revendication 4 ou 5, **caractérisé en ce que** les éléments d'arrêt (50, 52) sont disposés de façon telle que l'élément à ressort en spirale (54) est détendu et que de ce fait, l'arbre fileté (20) est arrêté, si dans le premier état découplé cité entre le moyen d'entraînement en rotation (32) et l'arbre fileté (20), un couple de rotation d'une valeur déterminée n'agit pas.

7. Entraînement linéaire selon la revendication 1 à 6, **caractérisé en ce que** l'élément actif comporte un bord oblique (46), qui par descente du moyen d'accouplement (40) déplace latéralement l'un des éléments d'accrochage (55) et tend de ce fait l'élément à ressort en spirale (54) pour le second état de découplage cité.

8. Entraînement linéaire selon la revendication 7, **caractérisé en ce que** le moyen de commutation (42) est conçu de façon telle qu'il peut commuter le moyen d'accouplement (40) dans une position sortie, de préférence supérieure, dans laquelle l'état d'accouplement cité est commuté, qu'il peut commuter le moyen d'accouplement (40) dans une position rentrée, de préférence moyenne, dans laquelle le premier état de découplage cité dans lequel l'arbre fileté (20) est arrêté est commuté, et qu'il peut commuter le moyen d'accouplement (40) dans une position inférieure, réglable ou divisée par synchronisation précise, dans laquelle le second état découplé cité, dans lequel l'arbre (20) peut fonctionner de façon partiellement freinée ou non freinée, est commuté.

9. Entraînement linéaire selon l'une quelconque des revendications précédentes, **caractérisé par** une roue, de préférence une roue hélicoïdale (30), une roue cylindrique, une roue conique, une roue à courroie dentée ou un élément à effet identique, pour l' interaction entre l'arbre d'entraînement (34) et le moyen d'accouplement (40).

10. Entraînement linéaire selon la revendication 9, **caractérisé par** des éléments d'enclenchement (36) sur la roue hélicoïdale (30), qui peuvent être amenés en interaction enclenchée avec des éléments d'enclenchement correspondants (38) sur le moyen d'accouplement (40).

11. Procédé d'exploitation d'un entraînement linéaire avec un arbre fileté non autobloquant (20), qui est rotatif dans les deux sens, un moyen d'entraînement en rotation (32) avec un arbre d'entraînement (34) pour générer un mouvement en rotation qui peut être amené en interaction avec l'arbre fileté (20), un moyen d'entraînement linéaire (61) qui par une rotation de l'arbre fileté (20) peut être déplacé en avant ou en arrière en fonction du sens de rotation de ce dernier, un moyen d'accouplement (40), à l'aide duquel l'arbre fileté (20) peut être amené en interaction et retiré de interaction avec le moyen d'entraînement en rotation (32), un moyen de commutation (42) pour commuter le moyen d'accouplement (40), au choix
- le moyen d'accouplement (40) étant commuté par le moyen de commutation (42) dans un état accouplé dans lequel l'arbre fileté (20) est en interaction et hors interaction avec le moyen d'entraînement en rotation,
- le moyen d'accouplement (40) étant commuté par le moyen de commutation (42) dans un premier état de découplage, dans lequel l'arbre fileté (20) est découplé du moyen d'entraînement en rotation (32) et dans lequel l'arbre fileté (20) est dans un état freiné ou arrêté, du fait d'un élément à ressort en spirale (54) et d'un élément à douille (56) pour loger l'élément à ressort en spirale, l'élément à ressort en spirale (54) s'appliquant fermement dans l'élément à douille (56) dans un premier état de détente du ressort et évitant de ce fait un mouvement de l'arbre fileté (20),
**caractérisé en ce que**
- l'élément d'accouplement (40) est commuté dans un second état de découplage, dans lequel l'arbre fileté (20) est également découplé du moyen d'entraînement en rotation (32), mais dans lequel l'arbre fileté (20) peut être déplacé dans les deux sens de rotation, l'effet de freinage et de ce fait la vitesse de rotation de l'arbre fileté pouvant être sélectionné par le réglage fin du moyen de commutation (42) et l'élément à ressort en spirale (54) étant tendu dans le second état de découplage cité, avec un élément d'action (44, 46) du moyen d'accouplement (40).

12. Procédé d'exploitation d'un entraînement linéaire selon la revendication 11, **caractérisé en ce que** l'élément à ressort en spirale (54) est tendu aux deux extrémités de l'élément à ressort en spirale (54) par des éléments d'accrochage (55, 57) et qu'il est détaché de ce fait de l'élément à douille (56), dans le second état de découplage cité, l'élément actif (44, 46) étant amené en engagement avec les éléments d'accrochage.

13. Procédé d'exploitation d'un entraînement linéaire selon l'une quelconque des revendications 11 ou 12, **caractérisé en ce que** l'élément à ressort en spirale (54) est également tendu au moins **en ce qu'**un élément d'arrêt supérieur (50) et un élément d'arrêt inférieur (52) sont emboîtés au moins partiellement l'un dans l'autre, les deux éléments d'arrêt (50, 52) étant disposés au moins partiellement à l'intérieur de l'élément à ressort en spirale (54) et comportant des surfaces de butée pour tendre l'élément à ressort en spirale (54).

14. Procédé d'exploitation d'un entraînement linéaire selon la revendication 13, **caractérisé en ce que** des éléments d'accrochage (55, 57) de l'élément à ressort en spirale (54) viennent en butée sur les surfaces de butée citées des éléments d'arrêt (50, 52) et que de ce fait l'élément à ressort en spirale (54) est tendu à l'état accouplé et **en ce que** dans le second état de découplage cité, l'élément actif (44, 46) tend l'élément à ressort en spirale (54) en fonction du réglage fin du moyen de commutation (42).

15. Procédé d'exploitation d'un entraînement linéaire selon la revendication 14, **caractérisé en ce que** les éléments d'arrêt (50, 52) tendent l'élément à ressort en spirale (54) par au moins l'un des éléments d'arrêt (50, 52), si à l'état accouplé entre le moyen d'entraînement en rotation (32) et l'arbre fileté (20) un couple de rotation de valeur déterminée agit dans un sens de rotation quelconque.

16. Procédé d'exploitation d'un entraînement linéaire selon la revendication 14 ou 15, **caractérisé en ce que** les éléments d'arrêt (50, 52) détendent l'élément à ressort en spirale (54) et que de ce fait, l'arbre fileté (20) est arrêté, si dans le premier état découplé cité entre le moyen d'entraînement en rotation (32) et l'arbre fileté (20) un couple de rotation de valeur déterminée n'agit pas.

17. Procédé d'exploitation d'un entraînement linéaire selon l'une quelconque des revendications 14 à 16, **caractérisé en ce que** dans le second état de découplage cité, le moyen d'accouplement (40) est descendu et le moyen actif (44, 46) déplace latéralement l'un des éléments d'accrochage (55) et tend de ce fait l'élément à ressort en spirale (54).
